# FASCICULE DE BREVET EUROPEEN

(11) **EP 3 340 237 B1**
(45) Date de publication et mention de la délivrance du brevet: **13.07.2022**
(21) Numéro de dépôt: 17206081.6
(22) Date de dépôt: 08.12.2017
(51) Int. Cl.: G10K 11/168, F02K 1/82, F02C 7/045

(54) **PROCEDE D'OBTENTION D'UNE COUCHE ACOUSTIQUE POREUSE ET PANNEAU ACOUSTIQUE COMPRENANT LA COUCHE ACOUSTIQUE POREUSE AINSI OBTENUE**
VERFAHREN ZUR GEWINNUNG EINER PORÖSEN AKUSTISCHEN SCHICHT, UND EINE AKUSTIKPLATTE WELCHE DIE RESULTIERENDE PORÖSE AKUSTISCHE SCHICHT ENTHÄLT
METHOD FOR OBTAINING A POROUS ACOUSTIC LAYER AND ACOUSTIC PANEL COMPRISING THE RESULTING POROUS ACOUSTIC LAYER

(30) Priorité: 23.12.2016 FR 1663297
(43) Date de publication de la demande: 27.06.2018
(73) Titulaire: Airbus Operations S.A.S., 31060 Toulouse (FR)
(72) Inventeur: RAVISE, Florian, 44000 NANTES (FR); MERCAT, Florent, 31300 TOULOUSE (FR)
(74) Mandataire: Gicquel, Olivier Yves Gérard

(56) Documents cités:
- FR-A1- 2 527 367
- US-A- 4 504 346
- US-A1- 2002 157 764
- US-A1- 2012 228 051
- US-A1- 2015 030 806
- US-B1- 8 820 477

## Description

La présente demande se rapporte à un procédé d'obtention d'une couche acoustique poreuse ainsi qu'à une couche acoustique poreuse ainsi obtenue.

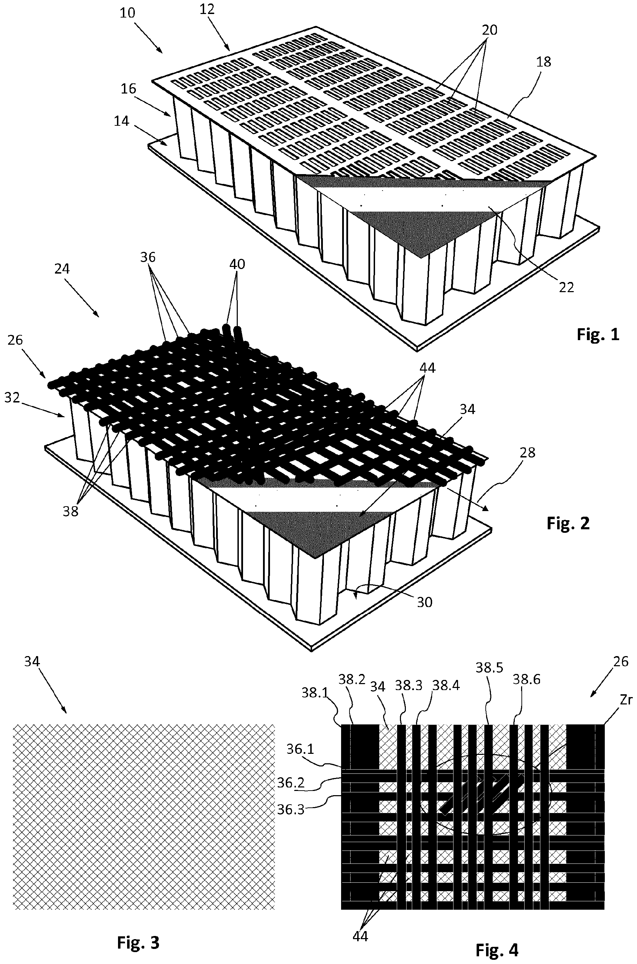

Un aéronef comprend de nombreux panneaux acoustiques pour traiter les différentes sources de bruit. Selon un mode de réalisation illustré par la figure 1, un panneau acoustique 10 comprend une couche acoustique poreuse 12 sur une première face, une couche réflectrice 14 sur une seconde face et une structure alvéolaire 16 intercalée entre la couche acoustique poreuse 12 et la couche réflectrice 14. En variante, le panneau acoustique comprend deux structures alvéolaires superposées et intercalées entre la couche poreuse 12 et la couche réflectrice 14, séparées par une couche acoustique poreuse appelée septum.

Selon un premier mode de réalisation, la couche acoustique poreuse est obtenue à partir d'une plaque en matériau composite qui est perforée en utilisant une technique d'usinage laser par exemple. Selon ce premier mode de réalisation, les ouvertures ont un diamètre constant qui prend une valeur comprise entre 0,6 et 2 mm.

Avec de telles valeurs de diamètres d'ouvertures, la couche acoustique poreuse a un comportement non-linéaire, fortement dépendant du niveau du bruit. De plus, de telles ouvertures induisent une traînée parasite qui altère les performances aérodynamiques du panneau acoustique.

La traînée parasite peut être améliorée en réalisant des ouvertures avec un diamètre inférieur à 0,1 mm. Cependant, il n'est pas possible de réaliser par usinage des ouvertures avec un diamètre inférieur à 0,3 mm dans une plaque de plusieurs millimètres d'épaisseur.

Selon un deuxième mode de réalisation, la couche acoustique poreuse est un pli tissé à partir de fils métalliques régulièrement espacés appelés « wiremesh » en anglais. Ce pli tissé permet d'obtenir des ouvertures avec des sections d'un diamètre inférieur à 0,1 mm. Cependant, ce pli tissé est trop souple pour pourvoir être appliqué sur la structure alvéolaire. De plus, le taux de surface ouverte du pli tissé est homogène et constant sur toute la surface du pli tissé.

Selon un troisième mode de réalisation décrit dans le document FR2823590 et illustré par la figure 1, la couche acoustique poreuse 12 comprend une plaque 18 qui présente une pluralité d'ouvertures 20 et un pli tissé 22 intercalé entre la plaque perforée 18 et la structure alvéolaire 16. La plaque perforée 18 assure une fonction structurale en rigidifiant le pli tissé 22.

Les ouvertures 20 réalisées dans la plaque 18 ont des formes oblongues et sont arrangées selon plusieurs lignes et plusieurs colonnes. Selon ce troisième mode de réalisation, les ouvertures ont un diamètre constant et les sections des interstices entre les fils du pli tissé 22 sont constantes et homogènes.

Dans l'ensemble des modes de réalisation présentés, la géométrie de la couche acoustique poreuse est constante. Or les conditions locales (position, niveau de bruit, vitesse écoulement, géométrie du conduit...) varient le long du panneau acoustique et avec de telles couches acoustiques poreuses, la performance acoustique du panneau n'est pas optimisée sur l'ensemble du panneau.

Les documents US 2012/228051 A1 et US 2015/030806 A1 divulguent des panneaux acoustiques selon l'art antérieur. Plus précisément, dans US2015/030806, la couche acoustique poreuse d'un panneau acoustique comprend une pluralité de mèches de fibres composites réparties selon au moins deux séries orientées selon deux directions sécantes pour délimiter entre les mèches de fibres des ouvertures avec des dimensions variables. Un pli fait de fibres mono-orientées et comprenant une couche thermoplastique est déposé sur la pluralité de mèches.

La présente invention vise à remédier à tout ou partie des inconvénients de l'art antérieur. A cet effet, l'invention a pour objet un procédé d'obtention d'une couche acoustique poreuse d'un panneau acoustique selon la revendication 1. Le procédé comprend une étape de dépose d'une pluralité de mèches de fibres réparties selon au moins deux séries orientées selon deux directions sécantes pour délimiter entre les mèches de fibres des ouvertures, les mèches de fibres comprenant une largeur, une orientation et/ou un espacement déterminés en fonction d'un taux de surface ouverte souhaité pour chaque zone de la couche acoustique poreuse.

Ainsi, il est possible de moduler le taux de surface ouverte zone par zone sur toute la surface de la couche acoustique poreuse et d'ajuster les dimensions des ouvertures en fonction du traitement acoustique souhaité pour chaque zone.

Selon une autre caractéristique, la largeur, l'orientation et/ou l'espacement des mèches de fibres sont déterminés en fonction du renforcement mécanique souhaité pour la couche acoustique poreuse.

Selon une configuration, les mèches de fibres d'une première série sont orientées selon une première direction, les mèches de fibres d'une deuxième série sont orientées selon une deuxième direction perpendiculaire à la première direction et les mèches de fibres d'une troisième série sont orientées selon une troisième direction oblique, sécante aux première et deuxième directions et parallèle à une direction des efforts repris par la couche acoustique poreuse.

Selon un mode de réalisation, le procédé d'obtention comprend une étape de dépose d'un pli tissé comportant un pas inférieur à 0,1 mm. Le procédé comprend une première étape de dépose du pli tissé et une deuxième étape de dépose des mèches de fibres sur le pli tissé, les mèches de fibres et le pli tissé étant réalisés en des matériaux configurés pour permettre aux mèches de fibres d'adhérer directement sur le pli tissé.

Selon une autre caractéristique, le procédé d'obtention d'une couche acoustique poreuse peut comprendre une étape de consolidation des mèches de fibres réalisée simultanément à l'étape de dépose des mèches de fibres.

L'invention a également pour objet un panneau acoustique comprenant au moins une couche acoustique poreuse selon la revendication 6. La couche acoustique poreuse comprend une pluralité de mèches de fibres réparties selon au moins deux séries orientées selon deux directions sécantes pour délimiter entre les mèches de fibres des ouvertures, les mèches de fibres comprenant une largeur, une orientation et/ou un espacement déterminés en fonction d'un taux de surface ouverte souhaité pour chaque zone de la couche acoustique poreuse.

Selon une autre caractéristique, la largeur, l'orientation et/ou l'espacement des mèches de fibres peuvent être déterminés en fonction du renforcement mécanique souhaité pour la couche acoustique poreuse.

Selon un mode de réalisation, la couche acoustique poreuse comprend un pli tissé comportant un pas inférieur à 0,1 mm.

D'autres caractéristiques et avantages ressortiront de la description de l'invention qui va suivre, description donnée à titre d'exemple uniquement, en regard des dessins annexés sur lesquels :
- La figure 1 est une vue en perspective d'une partie d'un panneau acoustique qui illustre un mode de réalisation de l'art antérieur,
- La figure 2 est une vue en perspective d'une partie d'un panneau acoustique qui illustre un mode de réalisation de l'invention,
- La figure 3 est une vue de dessus d'un pli tissé,
- La figure 4 est une vue de dessus d'un pli tissé sur lequel sont rapportées des mèches de fibres qui illustre un mode de réalisation de l'invention,
- Les figures 5 et 6 sont des schémas qui illustrent les étapes de pose d'un pli tissé et d'une pluralité de mèches de fibres d'un procédé d'obtention d'une couche acoustique poreuse selon l'invention,
- Les figures 7A et 7B sont des vues de dessus qui illustrent différents agencements de mèches de fibres d'une couche acoustique poreuse.

Comme illustré sur la figure 2, un panneau acoustique 24 comprend une couche acoustique poreuse 26 sur une première face, en contact avec un flux d'air matérialisé par la flèche 28, une couche réflectrice 30 sur une seconde face et au moins une structure alvéolaire 32 intercalée entre la couche acoustique poreuse 26 et la couche réflectrice 30.

Selon un mode de réalisation, le panneau acoustique 24 comprend une seule structure alvéolaire 32. En variante, le panneau acoustique 24 comprend deux structures alvéolaires 32 superposées et séparées par une couche acoustique poreuse.

A titre d'exemple, le panneau acoustique 24 est utilisé pour former une entrée d'air d'une nacelle d'un aéronef.

Selon l'invention, la couche acoustique poreuse 26 comprend au moins un pli tissé 34 et une pluralité de mèches de fibres 36, 38, 40 positionnées sur une première face 42 du pli tissé 34 et orientées selon au moins deux directions sécantes.

Selon l'invention, le pli tissé 34 est en résine thermoplastique, comme par exemple en polyétherétherkétone désigné par le sigle PEEK.

Le pli tissé 34 comprend des fils de chaîne et de trame orientés selon deux directions perpendiculaires et espacés régulièrement, avec un pas inférieur ou égal à 0,3 mm. Préférentiellement, le pas entre les fils du pli tissé 34 est inférieur à 0,1 mm.

Pour la présente demande, une mèche de fibres comprend une ou plusieurs fibres accolées les unes aux autres. La longueur d'une mèche de fibres 36, 38, 40 correspond à la plus grande dimension de la mèche de fibres. Lorsqu'une mèche de fibres 36, 38, 40 est plaquée contre le pli tissé 34, la largeur de la mèche de fibres 36, 38, 40 correspond à la dimension de la mèche de fibres parallèle au pli tissé 34 et perpendiculaire à la longueur. L'épaisseur de la mèche de fibres 36, 38, 40 correspond à la dimension de la mèche de fibres perpendiculaire au pli tissé 34 et à la longueur.

Lorsqu'une mèche de fibres 36, 38, 40 comprend plusieurs fibres, ces dernières sont agencées de manière à former une bande avec une largeur nettement supérieure à l'épaisseur.

Une mèche de fibres 36, 38, 40 a une largeur comprise entre 1 mm et plusieurs millimètres. Selon l'invention, les fibres des mèches sont en carbone et pré-imprégnées d'une résine thermoplastique, comme par exemple en polyétherétherkétone désigné par le sigle PEEK ou en polyétherimide désigné par le sigle PEI.

Selon un mode de réalisation, les mèches de fibres 36, 38, 40 sont pré-imprégnées d'une résine dont la température de transformation est inférieure ou égale à celle de la résine du pli tissé 34.

Ainsi, à titre d'exemple, l'usage d'une résine en polyétherimide pour les mèches de fibres 36, 38, 40 permet de limiter les risques de dégradation du pli tissé 34 réalisé en polyétherétherkétone, la température de fusion de la résine en polyétherétherkétone de l'ordre de 342°C étant supérieure à la plage de températures de transformation de la résine en polyétherimide comprise entre 217°C et 320°C.

Selon une autre caractéristique de l'invention, les matériaux du pli tissé 34 et des mèches de fibres 36, 38, 40 sont choisis de manière à ce que les mèches de fibres 36, 38, 40 adhèrent directement sur le pli tissé 34. Ainsi, les mèches de fibres 36, 38, 40 ne bougent plus après avoir été déposées sur le pli tissée 34.

Selon un agencement, les mèches de fibres 36 d'une première série sont orientées selon une première direction, par exemple parallèlement à l'axe de la nacelle, les mèches de fibres 38 d'une deuxième série sont orientées selon une deuxième direction perpendiculaire à la première direction, par exemple dans des plans perpendiculaires à l'axe de la nacelle, et les mèches de fibres 40 d'une troisième série sont orientées selon une troisième direction oblique, sécante aux première et deuxième directions.

Pour chaque série, les mèches de fibres sont réparties selon un pas (espacement entre deux mèches de fibres consécutives) qui varie de 0 mm à plusieurs millimètres. Ainsi pour chaque série, le pas peut être constant ou variable.

Ainsi, à titre d'exemple, pour la première série, le pas entre deux mèches de fibres 36.1 et 36.2 est nul et le pas entre deux mèches de fibres 36.2 et 36.3 est de l'ordre de quelques dixièmes de millimètres.

A titre d'exemple, pour la deuxième série, le pas entre deux mèches de fibres 38.1 et 38.2 est nul, le pas entre deux mèches de fibres 38.3 et 38.4 est de l'ordre de quelques dixièmes de millimètres et le pas entre deux mèches de fibres 38.5 et 38.6 est de l'ordre du millimètre. Les mèches de fibres d'une même série peuvent ne pas avoir les mêmes dimensions. Ainsi, la mèche de fibres 36.1 a une largeur nettement inférieure à celle de la mèche de fibres 36.2. Quel que soit l'agencement, la couche acoustique poreuse 26 comprend au moins deux séries de mèches de fibres 36, 38 orientées selon deux directions sécantes pour délimiter entre les mèches de fibres des ouvertures 44 avec des dimensions qui peuvent varier de l'ordre du dixième de millimètres à plusieurs millimètres, l'espacement, la largeur et/ou l'orientation des mèches de fibres 36, 38, 40 étant déterminés en fonction des performances acoustiques recherchées.

Ainsi, il est possible de moduler le taux de surface ouverte zone par zone, sur toute la surface de la couche acoustique poreuse, et d'ajuster les dimensions des ouvertures 44 en fonction du traitement acoustique souhaité pour chaque zone. En conséquence, selon l'invention, les dimensions et orientations des perforations ainsi que le taux de surface ouverte sont définis selon les conditions locales (position, niveau de bruit, vitesse d'écoulement, géométrie du conduit...) et les performances acoustiques recherchées afin d'optimiser le traitement acoustique le long du panneau acoustique.

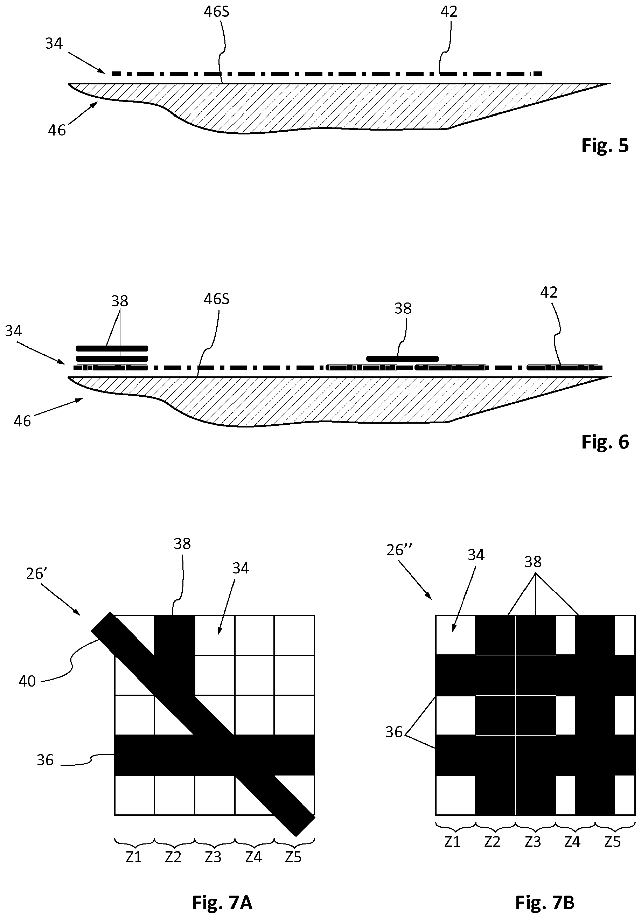

A titre d'exemple, comme illustré sur la figure 7A, la couche acoustique poreuse 26' comprend une première zone Z1 avec un taux de surface ouverte de l'ordre de 60%, une deuxième zone Z2 avec un taux de surface ouverte de l'ordre de 30% et d'autres zones Z3 à Z5 avec un taux de surface ouverte de l'ordre de 70%.

Comme illustré sur la figure 7B, la couche acoustique poreuse 26" comprend une première zone Z1 avec un taux de surface ouverte de l'ordre de 60%, des zones Z2 et Z3 avec un taux de surface ouverte de 0% et des zones Z4 et Z5 avec un taux de surface ouverte de l'ordre de 30%.

Selon une autre caractéristique, la largeur, l'orientation et/ou l'espacement des mèches de fibres 36, 38, 40 sont déterminés en fonction du renforcement mécanique souhaité, par exemple pour renforcer certaines zones de la couche acoustique poreuse 26 et/ou pour favoriser la reprise des efforts selon une direction.

Selon un mode de réalisation, les mèches de fibres 40.1 et 40.2 de la troisième série sont orientées parallèlement à la direction principale des efforts repris par la couche acoustique poreuse. A titre d'exemple, les mèches de fibres 40.1 et 40.2 sont orientées selon une direction à 45° pour favoriser la reprise des efforts orientés à 45° par rapport à l'axe de la nacelle.

Selon un autre mode de réalisation, les mèches de fibres 40.1, 40.2 ont des longueurs inférieures aux dimensions de la couche acoustique poreuse 26 et ne s'étendent pas d'un bord à l'autre de la couche acoustique poreuse 26, afin d'obtenir une zone de renforcement Zr.

Selon un mode opératoire illustré par les figures 5 et 6, un procédé d'obtention d'une couche acoustique poreuse comprend une première étape de dépose E1, sur une surface de dépose 46S d'un outillage 46 conformée selon la forme du panneau acoustique souhaitée, de mèches de fibres 36, 38, 40 selon au moins deux directions sécantes.

Après l'étape de dépose E1 des mèches de fibres 36, 38, 40, le procédé comprend une étape de consolidation E2 des mèches de fibres 36, 38, 40 pour obtenir une couche acoustique poreuse 26 rigide. Préférentiellement, l'étape de consolidation E2 est réalisée simultanément à l'étape de dépose E1.

Le procédé comprend une étape de dépose Ep d'un pli tissé 34. Préférentiellement, le pli tissé 34 est déposé sur la surface de dépose 46S préalablement à l'étape de dépose E1 des mèches de fibres 36, 38, 40.

Après les étapes de dépose E1 des mèches de fibres 36, 38, 40 et Ep du pli tissé 34, le procédé comprend une étape de consolidation E'2 des mèches de fibres 36, 38, 40 et une étape de consolidation E'2p du pli tissé 34 afin d'obtenir une couche acoustique poreuse 26 rigide.

Selon une première variante, l'étape de consolidation E'2 des mèches de fibres 36, 38, 40 et l'étape E'2p de consolidation du pli tissé 34 sont réalisées simultanément.

Selon une deuxième variante, le pli tissé 34 est consolidé préalablement à l'étape de dépose E1 des mèches de fibres 36, 38, 40 et l'étape E'2 est réalisée simultanément à l'étape de dépose E1 des mèches de fibres 36, 38, 40 par un dispositif de consolidation in-situ.

Selon un troisième mode opératoire, le pli tissé 34 d'une part et les mèches de fibres 36, 38, 40 d'autre part sont déposés et consolidés séparément. En suivant, le pli tissé 34 et les mèches de fibres 36, 38, 40 sont assemblés par tout moyen approprié.

L'étape de dépose E1 des mèches de fibres 36, 38, 40 est réalisée à l'aide d'une machine de placement pour déposer, sur la première face du pli tissé 34, chaque mèche de fibres 36, 38, 40 selon un agencement prédéfini. Ainsi, les dimensions et orientations des mèches de fibre ainsi que l'espacement entre deux mèches de fibres posées consécutivement et le taux de surface ouverte de la couche acoustique poreuse 26 sont adaptés sur toute la surface de la couche en fonction de la performance acoustique souhaitée.

Les mèches de fibres sont stockées sur au moins une bobine. La machine de placement peut comprendre plusieurs bobines avec des largeurs de mèches de fibres différentes.

A titre d'exemple, une première bobine comprend une mèche de fibres avec une largeur de l'ordre de 1 mm et une deuxième bobine comprend une mèche de fibres avec une largeur de l'ordre de 6,35 mm.

Lorsque la couche acoustique poreuse 26 est réalisée, elle est assemblée aux autres éléments du panneau acoustique 24.

Selon les configurations, il est possible de positionner le pli tissé 34 entre les mèches de fibres 36, 38, 40 et la structure alvéolaire 32 ou de positionner les mèches de fibres 36, 38, 40 entre le pli tissé 34 et la structure alvéolaire 32.

Selon un mode opératoire, après la réalisation de la couche acoustique poreuse 26, la jonction entre la structure alvéolaire 32 et la couche acoustique poreuse 26 est obtenue par polymérisation.

Selon l'invention, il est possible d'adapter le taux de surface ouverte des différentes zones d'une couche acoustique poreuse en fonction des performances acoustiques recherchées pour chacune de ces zones

Le taux de surface ouverte peut être ajusté en fonction de la largeur de fibres 36, 38, 40, de l'orientation des mèches de fibres 36, 38, 40 et/ou de l'espacement entre les mèches de fibres 36, 38, 40. Le taux de surface ouverte peut également être ajusté en fonction des dimensions des interstices du pli tissé 34.

Selon un autre avantage, il est possible d'ajuster zone par zone le renforcement mécanique de la couche acoustique poreuse 26.

## Revendications

1. Procédé d'obtention d'une couche acoustique poreuse d'un panneau acoustique **caractérisé en ce qu'**il comprend une première étape de dépose (Ep) d'un pli tissé (34) comportant des fils de chaîne et de trame orientés selon deux directions perpendiculaires et espacés régulièrement avec un pas inférieur à 0,3 mm et une deuxième étape de dépose sur le pli tissé (34) d'une pluralité de mèches de fibres (36, 38, 40) réparties selon au moins deux séries orientées selon deux directions sécantes pour délimiter entre les mèches de fibres (36, 38, 40) des ouvertures (44) avec des dimensions qui varient, les mèches de fibres (36, 38, 40) comprenant une largeur, une orientation et/ou un espacement déterminés en fonction d'un taux de surface ouverte souhaité pour chaque zone de la couche acoustique poreuse afin de moduler le taux de surface ouverte zone par zone, les mèches de fibres (36, 38, 40) et le pli tissé (34) étant réalisés en des matériaux configurés pour permettre aux mèches de fibres (36, 38, 40) d'adhérer directement sur le pli tissé (34), le pli tissé (34) étant réalisé en résine thermoplastique et les mèches de fibres (36, 38, 40) étant réalisées en carbone et pré-imprégnées d'une résine thermoplastique.

2. Procédé d'obtention d'une couche acoustique poreuse selon la revendication 1, **caractérisé en ce que** la largeur, l'orientation et/ou l'espacement des mèches de fibres (36, 38, 40) sont déterminés en fonction du renforcement mécanique souhaité pour la couche acoustique poreuse.

3. Procédé d'obtention d'une couche acoustique poreuse selon la revendication précédente, **caractérisé en ce que** les mèches de fibres (36) d'une première série sont orientées selon une première direction, les mèches de fibres (38) d'une deuxième série sont orientées selon une deuxième direction perpendiculaire à la première direction et les mèches de fibres (40) d'une troisième série sont orientées selon une troisième direction oblique, sécante aux première et deuxième directions et parallèle à une direction des efforts repris par la couche acoustique poreuse.

4. Procédé d'obtention d'une couche acoustique poreuse selon l'une des revendications 1 à 3, **caractérisé en ce que** le pli tissé (34) comporte un pas inférieur à 0,1 mm.

5. Procédé d'obtention d'un panneau acoustique comprenant au moins une couche acoustique poreuse selon l'une des revendications précédentes, **caractérisé en ce qu'**il comprend une étape de consolidation (E2) des mèches de fibres (36, 38, 40) réalisée simultanément à l'étape de dépose (E1) des mèches de fibres (36, 38, 40).

6. Panneau acoustique comprenant au moins une couche acoustique poreuse obtenue à partir du procédé d'obtention selon l'une des revendications précédentes, **caractérisé en ce que** ladite couche acoustique poreuse comprend un pli tissé (34) réalisé en résine thermoplastique et comportant des fils de chaîne et de trame orientés selon deux directions perpendiculaires et espacés régulièrement avec un pas inférieur à 0,3 mm et une pluralité de mèches de fibres (36, 38, 40) réalisées en carbone et pré-imprégnées d'une résine thermoplastique et réparties selon au moins deux séries orientées selon deux directions sécantes pour délimiter entre les mèches de fibres (36, 38, 40) des ouvertures (44) avec des dimensions qui varient, les mèches de fibres (36, 38, 40) comprenant une largeur, une orientation et/ou un espacement déterminés en fonction d'un taux de surface ouverte souhaité pour chaque zone de la couche acoustique poreuse (36, 38, 40) afin de moduler le taux de surface ouverte zone par zone.

7. Panneau acoustique selon la revendication précédente, **caractérisé en ce que** la largeur, l'orientation et/ou l'espacement des mèches de fibres (36, 38, 40) sont déterminés en fonction du renforcement mécanique souhaité pour la couche acoustique poreuse.

8. Panneau acoustique selon l'une des revendications 6 à 7, **caractérisé en ce que** le pli tissé (34) comporte un pas inférieur à 0,1 mm.

## Patentansprüche

1. Verfahren zur Herstellung einer porösen Akustikschicht aus einer Akustikplatte, **dadurch gekennzeichnet, dass** es einen ersten Schritt des Aufbringens (Ep) einer gewebten Lage (34) mit Kett- und Schussfäden, die in zwei senkrecht verlaufenden Richtungen ausgerichtet und mit einem Abstand kleiner als 0,3 mm regelmäßig beabstandet sind, und einen zweiten Schritt des Aufbringens einer Mehrzahl von Fasersträngen (36, 38, 40) auf die gewebte Lage (34) umfasst, die gemäß wenigstens zwei Reihen verteilt sind, die in zwei schneidenden Richtungen ausgerichtet sind, um zwischen den Fasersträngen (36, 38, 40) Öffnungen (44) mit Abmessungen zu begrenzen, die variieren, wobei die Faserstränge (36, 38, 40) eine Breite, eine Ausrichtung und/oder einen Abstand umfassen, die je nach einem gewünschten Anteil einer offenen Fläche für jeden Bereich der porösen Akustikschicht bestimmt werden, um den Anteil der offenen Fläche Bereich für Bereich zu modulieren, wobei die Faserstränge (36, 38, 40) und die gewebte Lage (34) aus Materialien hergestellt sind, die dazu ausgebildet sind, es den Fasersträngen (36, 38, 40) zu gestatten, direkt auf der gewebten Lage (34) zu haften, wobei die gewebte Lage (34) aus thermoplastischem Harz hergestellt ist und die Faserstränge (36, 38, 40) aus Kohlenstoff hergestellt und mit einem thermoplastischen Harz vorimprägniert sind.

2. Verfahren zur Herstellung einer porösen Akustikschicht nach Anspruch 1, **dadurch gekennzeichnet, dass** die Breite, die Ausrichtung und/oder der Abstand der Faserstränge (36, 38, 40) je nach der gewünschten mechanischen Verstärkung für die poröse Akustikschicht bestimmt werden.

3. Verfahren zur Herstellung einer porösen Akustikschicht nach dem vorhergehenden Anspruch, **dadurch gekennzeichnet, dass** die Faserstränge (36) einer ersten Reihe in einer ersten Richtung ausgerichtet sind, die Faserstränge (38) einer zweiten Reihe in einer zweiten Richtung senkrecht zur ersten Richtung ausgerichtet sind und die Faserstränge (40) einer dritten Reihe in einer dritten, schrägen Richtung ausgerichtet sind, die die erste und zweite Richtung schneidet und parallel zu einer Richtung der Kräfte verläuft, die von der porösen Akustikschicht aufgenommen werden.

4. Verfahren zur Herstellung einer porösen Akustikschicht nach einem der Ansprüche 1 bis 3, **dadurch gekennzeichnet, dass** die gewebte Lage (34) einen Abstand kleiner als 0,1 mm aufweist.

5. Verfahren zur Herstellung einer Akustikplatte, die wenigstens eine poröse Akustikschicht nach einem der vorhergehenden Ansprüche umfasst, **dadurch gekennzeichnet, dass** es einen Schritt des Verfestigens (E2) der Faserstränge (36, 38, 40) umfasst, der gleichzeitig mit dem Schritt des Aufbringens (E1) der Faserstränge (36, 38, 40) durchgeführt wird.

6. Akustikplatte umfassend wenigstens eine poröse Akustikschicht, die anhand des Herstellungsverfahrens nach einem der vorhergehenden Ansprüche hergestellt ist, **dadurch gekennzeichnet, dass** die poröse Akustikschicht eine gewebte Lage (34) umfasst, die aus thermoplastischem Harz hergestellt ist und Kett- und Schussfäden, die in zwei senkrecht verlaufenden Richtungen ausgerichtet und mit einem Abstand kleiner als 0,3 mm regelmäßig beabstandet sind, und eine Mehrzahl von Fasersträngen (36, 38,40) aufweist, die aus Kohlenstoff hergestellt und mit einem thermoplastischen Harz vorimprägniert sind und gemäß wenigstens zwei Reihen verteilt sind, die in zwei schneidenden Richtungen ausgerichtet sind, um zwischen den Fasersträngen (36, 38, 40) Öffnungen (44) mit Abmessungen zu begrenzen, die variieren, wobei die Faserstränge (36, 38, 40) eine Breite, eine Ausrichtung und/oder einen Abstand umfassen, die je nach einem gewünschten Anteil einer offenen Fläche für jeden Bereich der porösen Akustikschicht (36, 38, 40) bestimmt werden, um den Anteil der offenen Fläche Bereich für Bereich zu modulieren.

7. Akustikplatte nach dem vorhergehenden Anspruch, **dadurch gekennzeichnet, dass** die Breite, die Ausrichtung und/oder der Abstand der Faserstränge (36, 38,40) je nach der gewünschten mechanischen Verstärkung für die poröse Akustikschicht bestimmt sind.

8. Akustikplatte nach einem der Ansprüche 6 bis 7, **dadurch gekennzeichnet, dass** die gewebte Lage (34) einen Abstand kleiner als 0,1 mm aufweist.

## Claims

1. Method for obtaining a porous acoustic layer of an acoustic panel, **characterized in that** it comprises a first step of deposition (Ep) of a woven ply (34) having warp and weft threads oriented in two perpendicular directions and evenly spaced with a pitch less than 0.3 mm and a second step of deposition on the woven ply (34) of a plurality of fibre rovings (36, 38, 40) distributed in at least two series oriented in two secant directions so as to delimit between the fibre rovings (36, 38, 40) openings (44) with dimensions that vary, the fibre rovings (36, 38, 40) having a width, an orientation and/or a spacing that are determined as a function of an open surface ratio desired for each zone of the porous acoustic layer in order to modulate the open surface ratio zone by zone, the fibre rovings (36, 38, 40) and the woven ply (34) being made of materials configured to allow the fibre rovings (36, 38, 40) to adhere directly to the woven ply (34), the woven ply (34) being made of thermoplastic resin and the fibre rovings (36, 38, 40) being made of carbon and pre-impregnated with a thermoplastic resin.

2. Method for obtaining a porous acoustic layer according to Claim 1, **characterized in that** the width, the orientation and/or the spacing of the fibre rovings (36, 38, 40) are determined as a function of the mechanical reinforcement desired for the porous acoustic layer.

3. Method for obtaining a porous acoustic layer according to the preceding claim, **characterized in that** the fibre rovings (36) of a first series are oriented in a first direction, the fibre rovings (38) of a second series are oriented in a second direction perpendicular to the first direction and the fibre rovings (40) of a third series are oriented in an oblique third direction, secant to the first and second directions and parallel to a direction of the forces reacted by the porous acoustic layer.

4. Method for obtaining a porous acoustic layer according to one of Claims 1 to 3, **characterized in that** the woven ply (34) has a pitch less than 0.1 mm.

5. Method for obtaining an acoustic panel comprising at least one porous acoustic layer according to one of the preceding claims, **characterized in that** it comprises a step of consolidation (E2) of the fibre rovings (36, 38, 40) carried out simultaneously with the step of deposition (E1) of the fibre rovings (36, 38, 40).

6. Acoustic panel comprising at least one porous acoustic layer obtained from the obtention method according to one of the preceding claims, **characterized in that** said porous acoustic layer comprises a woven ply (34) made of thermoplastic resin and having warp and weft threads oriented in two perpendicular directions and evenly spaced with a pitch less than 0.3 mm and a plurality of fibre rovings (36, 38, 40) made of carbon and pre-impregnated with a thermoplastic resin and distributed in at least two series oriented in two secant directions so as to delimit between the fibre rovings (36, 38, 40) openings (44) with dimensions that vary, the fibre rovings (36, 38, 40) having a width, an orientation and/or a spacing that are determined as a function of an open surface ratio desired for each zone of the porous acoustic layer (36, 38, 40) in order to modulate the open surface ratio zone by zone.

7. Acoustic panel according to the preceding claim, **characterized in that** the width, the orientation and/or the spacing of the fibre rovings (36, 38, 40) are determined as a function of the mechanical reinforcement desired for the porous acoustic layer.

8. Acoustic panel according to either of Claims 6 and 7, **characterized in** the woven ply (34) has a pitch less than 0.1 mm.
